# EUROPÄISCHE PATENTSCHRIFT

(11) **EP 0 839 081 B1**
(45) Veröffentlichungstag und Bekanntmachung des Hinweises auf die Patenterteilung: **28.02.2001**
(21) Anmeldenummer: 96925719.5
(22) Anmeldetag: 11.07.1996
(51) Int. Cl.: B23K 35/26, C22C 11/00, C22C 13/00, C04B 37/02

(54) **LEGIERUNG, INSBESONDERE LOTLEGIERUNG, VERFAHREN ZUM VERBINDEN VON WERKSTÜCKEN DURCH LÖTEN MITTELS EINER LOTLEGIERUNG SOWIE VERWENDUNG EINER LEGIERUNG ZUM LÖTEN**
ALLOY, IN PARTICULAR A SOLDER ALLOY, METHOD FOR JOINING WORKPIECES BY SOLDERING USING THE SOLDER ALLOY AND USE OF THE ALLOY FOR SOLDERING
ALLIAGE, NOTAMMENT ALLIAGE DE BRASAGE, PROCEDE PERMETTANT D'ASSEMBLER DES PIECES PAR BRASAGE A L'AIDE D'UN ALLIAGE DE BRASAGE ET UTILISATION D'UN ALLIAGE POUR EFFECTUER DES OPERATIONS DE BRASAGE

(30) Priorität: 15.07.1995 DE 19526822
(43) Veröffentlichungstag der Anmeldung: 06.05.1998
(73) Patentinhaber: Euromat GmbH, 41836 Hückelhoven (DE)
(72) Erfinder: LUGSCHEIDER, Erich, D-52074 Aachen (DE); TILLMANN, Wolfgang, A-6714 Nüziders (AT); ZHUANG, Hongshou, Beijing 100083 (CN)
(74) Vertreter: Patentanwälte Wenzel & Kalkoff
(86) Internationale Anmeldenummer: EP9603037
(87) Internationale Veröffentlichungsnummer: WO9703789

(56) Entgegenhaltungen:
- EP-A- 0 235 546
- EP-A- 0 652 072
- AT-A- 193 612
- DE-A- 2 235 376
- DE-B- 1 128 672
- DE-C- 809 972
- WELDING IN THE WORLD, Bd. 30, Nr. 9 / 10, 1.September 1992, Seiten 243-251, XP000306564 XIAN A P: "PRECURSOR FILM IN A METAL-CERAMIC WETTING SYSTEM"

## Beschreibung

Die Erfindung bezieht sich auf eine Legierung, insbesondere Lotlegierung, auf ein Verfahren zum Verbinden von Werkstücken durch Löten mittels einer Lotlegierung sowie auf die Verwendung einer Legierung zum Löten.

Löten ist eine der am weitesten verbreiteten Fügetechniken. Einer noch weiteren Verbreitung des Lötens zum Verbinden von Werkstücken standen aber bisher noch einige Nachteile entgegen.

Bisher bekannte Lotlegierungen können nur dann mit gutem Ergebnis verwendet werden, wenn die Oberflächen der zu verbindenden Werkstücke vor dem Aufbringen des Lotes gesäubert und von ggf. vorhandenen Oxidschichten befreit werden, um einen guten Kontakt des Lotes mit den Werkstückoberflächen zu erreichen, und/oder wenn gleichzeitig mit dem Lot ein Flußmittel eingesetzt wird. Dies hat zur Folge, daß die zu lötenden Werkstückoberflächen einer aufwendigen Vorbehandlung bedürfen und/oder daß der Lötvorgang durch den Einsatz eines Flußmittelzusatzes komplizierter auszuführen ist. Desweiteren besteht die Gefahr, daß nach dem Lötvorgang Flußmittelrückstände an den verlöteten Werkstücken verbleiben, die zu Problemen bei weiteren Verarbeitungsschritten führen können oder die die Langzeithaltbarkeit der Lötverbindungen beeinträchtigen können. Schließlich sind einige verwendete Flußmittel gesundheitlich und/oder ökologisch bedenklich.

Bekannte handelsübliche Weichlotlegierungen aus Zinn und/oder Blei und ggf. Silber, die bei etwa 200°C verarbeitbar sind, haben weiter den Nachteil, daß sie viele Werkstoffe gar nicht oder nur sehr schlecht benetzen und ihr Einsatz zur Verbindung von Werkstücken, die Oberflächen aus derartigen schlecht oder gar nicht benetzbaren Werkstoffen aufweisen, nicht möglich ist. Es ist mit derartigen klassischen Weichloten beispielsweise nicht möglich, Werkstücke aus Keramikwerkstoffen zu verlöten, da keramische Oberflächen nicht benetzt werden.

Diesen Nachteil hat man bereits dadurch versucht zu überwinden, daß dem Pb/Sn- Weichlot 1-10% Titan und/oder Zirkon und/oder Hafnium als Aktivmetall zugesetzt wurde, EP-A-235 546. Diese sogenannten Weichaktivlote mit Aktivmetall-Anteil zeigen eine wesentlich verbesserte Benetzung auch von an sich schlecht benetzbaren Oberflächen, wie beispielsweise Keramiken. Ein erheblicher Nachteil dieser Weichaktivlote besteht allerdings darin, daß sie Verarbeitungstemperaturen von 600 bis 900°C benötigen und nur im Hochvakuum oder in reinem Schutzgas verarbeitet werden können. Durch die Notwendigkeit der Verarbeitung unter Vakuum wird das Lötverfahren sehr aufwendig; in vielen Fällen scheidet ihre Anwendung vollständig aus. Des weiteren schränkt die hohe Verarbeitungstemperatur die Auswahl an lötbaren Werkstoffen stark ein.

Daneben ist noch für gewisse Spezialfälle das Verfahren des eutektischen Kupferbondens bekannt, das aber noch aufwendiger und komplizierter ist.

Im übrigen ist eine Pb-Sn-Basis-Lötlegierung, insbesondere für das Löten unter Ultraschallschwingung, mit einem SE-Gehalt von 0,1-15%, vorzugsweise 1-4%, jedoch ohne Aktivmetall-Anteil bekannt, DE-A-2 235 376.

Es besteht daher die Aufgabe, eine Legierung, insbesondere Lotlegierung, sowie ein Verfahren zum Verbinden von Werkstücken durch Löten mittels einer Lotlegierung vorzuschlagen, das eine vielseitigere Verwendbarkeit der Weichlottechnik ermöglicht. Insbesondere besteht die Aufgabe, eine Legierung, insbesondere Lotlegierung, vorzuschlagen, die auch in sauerstoffhaltigen Atmosphären, wie beispielsweise an Luft, verarbeitbar ist, eine relativ geringe Verarbeitungstemperatur besitzt und auch an sich schlecht benetzbare Oberflächen, wie beispielsweise Keramikoberflächen, gut benetzt. Die vorzuschlagende Lotlegierung soll in Weiterbildung der Erfindung flußmittelfrei verarbeitbar sein.

Die Aufgabe wird durch eine neuartige Legierung, insbesondere Lotlegierung nach Anspruch 1 bzw., durch ein Verfahren zum Verbinden von Werkstücken durch Löten mittels dieser neuartigen Lotlegierung nach Anspruch 23 sowie durch die Verwendung dieser neuartigen Legierung zum Löten gelöst. Die neuartige Legierung ist dadurch gekennzeichnet, daß diese
- mindestens 1 Gewichts-% eines Elements oder eines Gemischs aus Elementen der Nebengruppe IVa und/oder Va des Periodensystems,
- mindestens 0,01 Gewichts-% eines Elements oder eines Gemischs aus Elementen der Lanthaniden-Gruppe,
- wahlweise mindestens 0,5 Gewichts-% Silber oder Kupfer oder Indium oder eines Gemischs von Silber und/oder Kupfer und/oder Indium und
- wahlweise mindestens 0,01 Gewichts-% Gallium enthält
- und der Rest aus Zinn oder Blei oder aus einem Gemisch von Zinn und Blei
- sowie ggf. aus üblichen Verunreinigungen besteht.

Die vorgeschlagene Legierung besteht also aus mindestens drei Komponenten, nämlich einer ersten Komponente, die aus einem Element oder einem Gemisch aus Elementen der Nebengruppe IVa und/oder Va des Periodensystems besteht; einer zweiten Komponente, die aus einem Element oder einem Gemisch aus Elementen der Lanthaniden-Gruppe besteht; und aus einer dritten Rest-Komponente, die aus Zinn oder Blei oder aus einem Gemisch von Zinn und Blei besteht.

Bevorzugt enthält die erfindungsgemäße Legierung zusätzlich eine weitere Komponente, die aus Silber oder Kupfer oder Indium oder einem Gemisch von Silber und/oder Kupfer und/oder Indium besteht; und/oder eine andere weitere Komponente, die aus Gallium besteht. Die vierte und ggf. fünfte Komponente sind vorteilhafterweise in der neuartigen Legierung enthalten, sind aber zur Erreichung der erfindungsgemäßen Vorteile nicht unbedingt notwendig.

Zu den Elementen der Nebengruppe IVa und/oder Va des Periodensystems gehören u. a. die Elemente Titan, Zirkonium, Hafnium, Vanadium, Niob und Tantal, von denen Titan bevorzugt wird. Zu den Elementen der Lanthanidengruppe gehören u.a. Cer, Präsodym, Neodym, Gadolinium und Ytterbium, von denen Cer bevorzugt wird.

Die Funktion der einzelnen Legierungskomponenten läßt sich wie folgt beschreiben:
- Die dritte Rest-Komponente aus Zinn oder Blei oder aus einem Gemisch von Zinn und Blei ist eine klassische Lotbasis.
- Die erste Komponente, die aus einem Element oder aus einem Gemisch aus Elementen der Nebengruppe IVa und/oder Va des Periodensystems - insbesondere aus Titan - besteht, erhöht die Benetzungsfähigkeit der Legierung, insbesondere für Keramikoberflächen. Sie dient weiter der Reduktion der Oberflächenspannung der Legierung im geschmolzenen Zustand.
- Die zweite Komponente, die aus einem Element oder aus einem Gemisch aus Elementen der Lanthaniden-Gruppe - insbesondere Cer - besteht, verhindert aufgrund ihrer hohen Sauerstoff-Affinität die Oxidation der ersten Komponente, die insbesondere aus Titan besteht. Aufgrund der hohen Sauerstoff-Affinität verbindet sich Sauerstoff aus der Umgebung, aus Oxidschichten der zu verbindenden Werkstoffe oder aus sonstigen Quellen bevorzugt mit dem Cer und nicht mit dem Titan, so daß das Titan zumindest weitgehend in nichtoxidierter Form erhalten bleibt und seine positiven Wirkungen entfalten kann.

Mit Legierungen erfindungsgemäßer Zusammensetzung kann eine Vielzahl metallischer und nichtmetallischer Werkstoffe, auch oxidische und nichtoxidische Keramikwerkstoffe, mit sich selbst oder mit anderen Werkstoffen verbunden werden. Die Lötverbindung kann vorteilhafterweise in einer sauerstoffhaltigen Atmosphäre, beispielsweise an Luft, ausgeführt werden. Es besteht weiter im allgemeinen keine Notwendigkeit für die Verwendung eines Flußmittels.

Die Verarbeitungstemperatur der erfindungsgemäßen Legierung beträgt bevorzugt höchstens 500°C, insbesondere zwischen 200 und 450°C. Sie kann durch Zugabe weiterer Komponenten, wie die genannten Silber und/oder Kupfer und/oder Indium und/oder Gallium, auf den für den jeweiligen Verwendungszweck gewünschten Wert abgestimmt werden.

Im Unterschied zu den bekannten, sogenannten Weichaktivloten liegen die Verarbeitungstemperaturen einer erfindungsgemäßen Legierung somit drastisch niedriger. Es entfällt ferner die Notwendigkeit eines Vakuums oder einer Schutzgasatmosphäre für die Durchführung der Lötung.

Der Verbindungsmechanismus beruht auf:
- der Entfernung evtl. vorhandener Oxidbelegungen auf den Oberflächen der zu verbindenden Werkstücke durch reaktive Legierungskomponenten;
- der Verringerung der Oberflächenspannung im geschmolzenem Zustand infolge von Wechselwirkungen der Legierungskomponenten mit den Umgebungsmedien und
- der Anbindung über physikalische Kräfte.

Lotlegierungen gemäß der Erfindung sind in den verschiedensten Bereichen unter den verschiedensten Verarbeitungsbedingungen gut einsetzbar. Sie können beispielsweise verwendet werden, um problemlos Kupfer mit Stahl oder gegossenen Eisen-Kohlenstoff-Legierungen zu verlöten. Sie ermöglichen auch, Kupfer auf ein Siliziumwerkstück - beispielsweise einen Halbleiter-Wafer - zu löten. Für Legierungen gemäß der Erfindung ergeben sich damit zahlreiche Anwendungen in der Halbleiter-elektronik, und zwar sowohl in der Mikroelektronik als auch im Leistungselektronikbereich.

Neben der Möglichkeit, beispielsweise eine Kupferplatte auf einen Silizium-Wafer aufzulöten, eröffnet sich z. B. auch die Möglichkeit, ein Werkstück aus Kupfer mit einem Werkstück aus Aluminiumnitrid zu verlöten. Aluminiumnitrid ist ein guter Isolator, der in seinen Isolationseigenschaften mit dem weitverbreiteten Isolator Aluminiumoxid vergleichbar ist, aber eine deutlich höhere Wärmeleitfähigkeit als Aluminiumoxid zeigt. Eine erfindungsgemäße Lötlegierung kann daher dazu benutzt werden, einen Leistungshalbleiter sehr gut wärmeleitend mit einem Aluminiumnitrid-Werkstück zu verbinden, das die Verlustwärme des Leistungshalbleiterelements in einen Träger abführt, wobei das Aluminiumnitrid-Werkstück aber eine elektrische Isolation gegenüber dem Träger gewährleistet.

Eine andere mögliche Vorgehensweise ist beispielsweise, eine Kupferplatte mittels einer erfindungsgemäßen Legierung auf einen Silizium-, Aluminiumnitrid- oder faserverstärkten Kohlenstoff-Trägerkörper aufzulöten. Anschließend können weitere metallische Bauelemente in bekannter Weise mit bekannten, handelsüblichen Loten an diese Kupferplatte angelötet werden.

Mit einem erfindungsgemäßen Legierungslot können auch Alumi-nium-Werkstücke untereinander oder mit Kupfer- oder Stahlbauteilen oder Bauteilen aus gegossenen Eisen-Kohlenstoff-Legierungen wie Gußeisen oder Stahlguß verlötet werden. Dies kann beispielsweise in der Installationstechnik vorteilhaft eingesetzt werden, z. B. zum Verbinden von Komponenten bei Bau oder Reparatur von Kühlern oder Wärmetauschern oder zum gut wärmeleitenden Anfügen von Thermofühlern bei Heizungs- und Warmwasseranlagen.

Erfindungsgemäße Lotlegierungen können in verschiedensten Darstellungsformen hergestellt und eingesetzt werden, beispielsweise als Drähte, Stäbe, Bleche, Granulate, Pulver, Pasten, Folien oder Formteile. Lötpasten sind als sogenannte Metallisierungs-, Dickschicht-, Dickfilm- oder Siebdruck-Lötpasten bekannt und sind im Siebdruckverfahren auf gedruckte Schaltungen aufbringbar.

Zur Erwärmung einer Legierung gemäß der Erfindung eignen sich alle bekannten Erwärmungsverfahren, beispielsweise Erwärmung mit Lötkolben oder Flamme, Plattenerwärmung, Heißlufterwärmung, Ultraschallerwärmung oder Widerstandserwärmung. Erfindungsgemäße Lotlegierungen sind auch im Reflow- oder Schwalllötverfahren einsetzbar.

Die Löttemperatur kann durch die Zugabe der erfindungsgemäß wahlweise zusätzlich einsetzbaren weiteren Komponente(n) Silber, Kupfer, Indium oder Gallium beeinflußt werden. Sie kann ebenfalls durch die Wahl der Restkomponente - also Zinn oder Blei oder ein Gemisch aus Blei und Zinn - beeinflußt werden. Während bei erfindungsgemäßen Zinnloten, deren Restkomponente zumindest überwiegend aus Zinn besteht, die Verarbeitungstemperatur i. a. zwischen 220 und 350°C liegt, beträgt die Löttemperatur von erfindungsgemäßen Bleiloten, deren Restkomponente zumindest überwiegend aus Blei besteht, i. a. zwischen 320 und 450°C.

Weitere vorteilhafte Ausgestaltungen der Erfindung sind Gegenstand der Unteransprüche.

Lotlegierungen gemäß der Erfindung besitzen, wie angegeben, eine Reihe bedeutender Vorteile gegenüber dem Stand der Technik. Als wichtigstes ist zu nennen, daß erfindungsgemäße Lotlegierungen in allen Umgebungsatmosphären auch flußmittelfrei verarbeitbar sind, sie eine relativ geringe Verarbeitungstemperatur besitzen und auch bei an sich sehr schlecht benetzbaren Oberflächen einsetzbar sind. Sie sind dabei nicht oder kaum teurer herzustellen als bekannte Lotlegierungen, beispielsweise die sogenannten Weichaktivlote. Neben den Anwendungsfällen, in denen bereits heute Lötverbindungen zum Fügen von Werkstücken verwendet werden, werden sie z. B. auch in vielen Bereichen, in denen bisher Klebeverbindungen zum Fügen angewendet wurden, vorteilhaft eingesetzt werden können.

Die erfindungsgemäße Legierung, insbesondere Lotlegierung, das erfindungsgemäße Verfahren und die erfindungsgemäße Verwendung der Legierung werden im folgenden anhand eines Ausführungsbeispiels noch näher erläutert.

Zur Herstellung einer Lötverbindung zwischen einer Kupferplatte und einer Aluminiumnitridplatte wird zunächst die Kupferplatte auf einer elektrischen Heizplatte angeordnet. Auf die Kupferplatte, die nicht besonders vorbereitet - beispielsweise vorgereinigt oder -poliert - sein muß, wird eine Folie aus einer erfindungsgemäßen Lotlegierung gelegt. Die gewalzte Folie besteht aus einer Legierung aus 7 Gewichts-% Silber, 2 Gewichts-% Kupfer, 4 Gewichts-% Titan, 0,1 Gewichts-% Cer, 0,05 Gewichts-% Gallium und Rest Zinn. Auf die Folie wird anschließend die AluminiumnitridPlatte gelegt. Anschließend übt man auf den Plattenstapel eine mechanische Druckkraft in Richtung auf die Heizplatte aus, beispielsweise indem man ein Metallgewicht obenauf auf den Plattenstapel legt.

Beheizt man nun die Heizplatte durch Einschalten der Heizplattenheizung, so erwärmt sich der Plattenstapel. Bei diesem Ausführungsbeispiel einer erfindungsgemäßen Legierung beträgt die Löttemperatur etwa 350°C, die Lötdauer einige Minuten. Nach dem Schmelzen der Lotlegierungsfolie läßt man den Plattenstapel durch Abschalten der Heizplatte wieder erkalten, so daß das geschmolzene Lot beim Erstarren die Kupferplatte und die Aluminiumnitridplatte fest miteinander verbindet. Für die Ausbildung der Verbindung wird - wie bei diesem Ausführungsbeispiel - eine zusätzliche mechanische Unterstützung des geschmolzenen Lotes bevorzugt, um ein gleichmäßiges Lotfließen zu garantieren. Es wird bevorzugt, daß die Abkühlung des Plattenstapels relativ langsam erfolgt, wenn - wie bei diesem Ausführungsbeispiel - Stoffe mit stark unterschiedlichen thermischen Ausdehnungskoeffizienten miteinander verlötet werden, da sonst bei zu schneller und insbesondere ungleichmäßiger Abkühlung Risse auftreten könnten.

Das geschilderte Lotverfahren kann auch mit anderen erfindungsgemäßen Lotlegierungen durchgeführt werden. Eine erfindungsgemäße Lotlegierung aus 4 Gewichts-% Silber, 4 Gewichts-% Titan, 0,1 Gewichts-% Cer, 0,1 Gewichts-% Gallium und Rest Zinn kann z. B. ebenfalls bei 350°C verarbeitet werden, während eine erfindungsgemäße Lotlegierung aus 4 Gewichts-% Silber, 2 Gewichts-% Titan, 2 Gewichts-% Zinn, 2 Gewichts-% Indium, 0,1 Gewichts-% Cer, 0,05 Gewichts-% Gallium und Rest Blei bei 400°C verarbeitet wird.

Neben dem geschilderten Lötverfahren können auch alle anderen dem Fachmann bekannten Lötverfahren mit einer erfindungsgemäßen Lotlegierung durchgeführt werden, wobei im Hinblick auf den gewünschten Einsatzzweck ggf. Optimierungen der Zusammensetzung im Rahmen der Patentansprüche leicht im Wege des Experiments durch den Fachmann ermittelbar sind.

## Patentansprüche

1. Legierung, insbesondere Lotlegierung, **dadurch gekennzeichnet,** daß diese aus
- 1 - 10 Gewichts-% eines Elements oder eines Gemisches aus Elementen ausgewählt aus Titan Ti, Zirkonium Zr, Hafnium Hf, Vanadium V, Niob Nb und/oder Tantal Ta,
- 0,01 - 1 Gewichts-% eines Elements oder eines Gemisches aus Elementen ausgewählt aus der Gruppe der Lanthaniden (seltene Erden),
- wahlweise 0,5 - 10 Gewichts-% eines Elements oder eines Gemisches aus Elementen ausgewählt aus Silber Ag, Kupfer Cu und/oder Indium In und
- wahlweise 0,01 - 1 Gewichts-% Gallium Ga
- und der Rest aus Zinn Sn oder Blei Pb oder aus einem Gemisch von Zinn Sn und Blei Pb
- sowie aus üblichen Verunreinigungen besteht.

2. Legierung nach Anspruch 1, dadurch **gekennzeichnet,** daß das Element oder das Gemisch aus Elementen der in Anspruch 1 zuerst erwähnten Nebengruppe IVa und/oder Va des Periodensystems Titan ist bzw. enthält.

3. Legierung nach Anspruch 2, dadurch **gekennzeichnet,** daß diese 1 - 5 Gewichts-% eines Elements oder eines Gemischs aus Elementen der in Anspruch 1 zuerst erwähnten Nebengruppe IVa und/oder Va des Periodensystems enthält.

4. Legierung nach einem oder mehreren der vorhergehenden Ansprüche, dadurch **gekennzeichnet,** daß das Element oder das Gemisch aus Elementen der Lanthaniden-Gruppe Cer und/oder Samarium und/oder Neodym ist bzw. enthält.

5. Legierung nach Anspruch 4, dadurch **gekennzeichnet**, daß das Element oder das Gemisch aus Elementen der Lanthaniden-Gruppe Cer ist bzw. enthält.

6. Legierung nach Anspruch 5, dadurch **gekennzeichnet,** daß das Element Cer ist.

7. Legierung nach einem der Ansprüche 1-6, dadurch **gekennzeichnet,** daß diese 0,5 - 5 Gewichts-% Silber oder Kupfer oder Indium oder eines Gemischs von Silber und/oder Kupfer und/oder Indium enthält.

8. Legierung nach einem oder mehreren der Ansprüche 1 bis 7, dadurch **gekennzeichnet,** daß die Legierung mindestens 0,5 Gewichts-% Silber enthält.

9. Legierung nach Anspruch 8, dadurch **gekennzeichnet,** daß diese 0,5 - 10 Gewichts-% Silber enthält.

10. Legierung nach Anspruch 9, dadurch **gekennzeichnet,** daß diese 0,5 - 5 Gewichts-% Silber enthält.

11. Legierung nach einem oder mehreren der Ansprüche 7 bis 10, dadurch **gekennzeichnet,** daß die Legierung mindestens 0,5 Gewichts-% Kupfer enthält.

12. Legierung nach Anspruch 11, dadurch **gekennzeichnet,** daß diese 0,5 - 10 Gewichts-% Kupfer enthält.

13. Legierung nach Anspruch 12, dadurch **gekennzeichnet,** daß diese 0,5 - 5 Gewichts-% Kupfer enthält.

14. Legierung nach einem oder mehreren der Ansprüche 7 bis 13, dadurch **gekennzeichnet,** daß die Legierung mindestens 0,5 Gewichts-% Indium enthält.

15. Legierung nach Anspruch 14, dadurch **gekennzeichnet,** daß diese 0,5 - 10 Gewichts-% Indium enthält.

16. Legierung nach Anspruch 15, dadurch **gekennzeichnet,** daß diese 0,5 - 5 Gewichts-% Indium enthält.

17. Legierung nach einem oder mehreren der vorhergehenden Ansprüche, dadurch **gekennzeichnet,** daß der Rest aus Zinn besteht.

18. Legierung nach einem oder mehreren der Ansprüche 1 bis 16, dadurch **gekennzeichnet,** daß der Rest aus Blei besteht.

19. Legierung nach einem oder mehreren der Ansprüche 1 bis 16, dadurch **gekennzeichnet,** daß der Rest aus einem Gemisch von Zinn und Blei besteht.

20. Legierung nach einem oder mehreren der vorhergehenden Ansprüche, dadurch **gekennzeichnet,** daß die Legierung aus etwa 4 Gewichts-% Silber, etwa 2 Gewichts-% Titan, etwa 2 Gewichts-% Zinn, etwa Gewichts-% Indium, etwa 0,1 Gewichts-% Cer, etwa 0,05 Gewichts-% Gallium und Rest Blei sowie ggf. üblichen Verunreinigungen besteht.

21. Legierung nach einem oder mehreren der Ansprüche 1 bis 19, dadurch **gekennzeichnet,** daß die Legierung aus etwa 4 Gewichts-% Silber, etwa 4 Gewichts-% Titan, etwa 0,1 Gewichts-% Cer, etwa 0,1 Gewichts-% Gallium und Rest Zinn sowie ggf. üblichen Verunreinigungen besteht.

22. Legierung nach einem oder mehreren der Ansprüche 1 bis 19, dadurch **gekennzeichnet,** daß die Legierung aus etwa 7 Gewichts-% Silber, etwa 2 Gewichts-% Kupfer, etwa 4 Gewichts-% Titan, etwa 0,1 Gewichts-% Cer, etwa 0,05 Gewichts-% Gallium und Rest Zinn sowie ggf. üblichen Verunreinigungen besteht.

23. Verfahren zum Verbinden von Werkstücken durch Löten mittels einer Lotlegierung, dadurch **gekennzeichnet,** daß die Lotlegierung
- mindestens 1 Gewichts-% eines Elements oder eines Gemischs aus Elementen der Nebengruppe IVa und/oder Va des Periodensystems,
- mindestens 0,01 Gewichts-% eines Elements oder eines Gemischs aus Elementen der Lanthaniden-Gruppe,
- wahlweise mindestens 0,5 Gewichts-% Silber oder Kupfer oder Indium oder eines Gemischs von Silber und/oder Kupfer und/oder Indium und
- wahlweise mindestens 0,01 Gewichts-% Gallium enthält
- und der Rest aus Zinn oder Blei oder aus einem Gemisch von Zinn und Blei
- sowie ggf. aus üblichen Verunreinigungen besteht.

24. Verfahren nach Anspruch 23, dadurch **gekennzeichnet,** daß die Lötverbindung in einer sauerstoffhaltigen Atmosphäre ausgeführt wird.

25. Verfahren nach Anspruch 24, dadurch **gekennzeichnet,** daß die Lötverbindung an Luft ausgeführt wird.

26. Verfahren nach einem oder mehreren der Ansprüche 23 bis 25, dadurch **gekennzeichnet,** daß die Lötverbindung bei einer Lottemperatur von höchstens 500°C ausgeführt wird.

27. Verfahren nach Anspruch 26, dadurch **gekennzeichnet,** daß die Lötverbindung bei einer Lottemperatur von 200 - 450°C ausgeführt wird.

28. Verfahren nach einem oder mehreren der Ansprüche 23 bis 27, dadurch **gekennzeichnet,** daß die Lötverbindung ohne Verwendung eines Flußmittels ausgeführt wird.

29. Verfahren nach einem oder mehreren der Ansprüche 23 bis 28, dadurch **gekennzeichnet,** daß mindestens eines der zu verbindenden Werkstücke zumindest an seiner Lötverbindungsfläche aus einem metallischen Werkstoff, insbesondere aus Aluminium, Kupfer, Stahl oder gegossenen Eisen-Kohlenstoff-Legierungen wie Gußeisen oder Stahlguß besteht.

30. Verfahren nach einem oder mehreren der Ansprüche 23 bis 29, dadurch **gekennzeichnet,** daß mindestens eines der zu verbindenden Werkstücke zumindest an seiner Lötverbindungsfläche aus einem nichtmetallischen Werkstoff, insbesondere aus Aluminiumnitrid, Silizium oder faserverstärktem Kohlenstoff besteht.

31. Verfahren nach Anspruch 30, dadurch **gekennzeichnet,** daß der'nichtmetallische Werkstoff ein oxidischer oder nichtoxidischer Keramikwerkstoff ist.

32. Verfahren nach einem oder mehreren der Ansprüche 23 bis 31, dadurch **gekennzeichnet,** daß die Lotlegierung nach einem oder mehreren der Ansprüche 1 bis 22 ausgebildet ist.

## Claims

1. Alloy, in particular old alloy, characterized in that it consists of
- 1 - 10% by weight of an element or a mixture of elements selected from the group consisting of titanium Ti, zirconium Zr, hafnium Hf, vanadium V, niobium Nb and/or tantalum Ta,
- 0.01 - 1% by weight of an element or a mixture of elements selected from the group of the lanthanides (rare earths),
- optionally 0.5 - 10% by weight of an element or a mixture of elements selected from the group consisting of silver Ag, copper Cu and/or indium In and
- optionally 0.01 - 1% by weight of gallium Ga
- and the remainder consists of tin Sn or lead Pb or of a mixture of tin Sn and lead Pb
- and of the usual impurities.

2. Alloy according to Claim 1, characterized in that the element or the mixture of elements of subgroup IVa and/or Va of the Periodic Table of the Elements mentioned first in Claim 1 is or comprises titanium.

3. Alloy according to Claim 2, characterized in that it comprises 1 - 5% by weight of an element or a mixture of elements of subgroup IVa and/or Va of the Periodic Table of the Elements mentioned first in Claim 1.

4. Alloy according to one or more of the preceding claims, characterized in that the element or the mixture of elements of the lanthanide group is or comprises cerium and/or samarium and/or neodymium.

5. Alloy according to Claim 4, characterized in that the element or the mixture of elements of the lanthanide group is or comprises cerium.

6. Alloy according to Claim 5, characterized in that the element is cerium.

7. Alloy according to one of Claims 1 - 6, characterized in that it comprises 0.5 - 5% by weight of silver or copper or indium or a mixture of silver and/or copper and/or indium.

8. Alloy according to one or more of Claims 1 to 7, characterized in that the alloy comprises at least 0.5% by weight of silver.

9. Alloy according to Claim 8, characterized in that it comprises 0.5 - 10% by weight of silver.

10. Alloy according to Claim 9, characterized in that it comprises 0.5 - 5% by weight of silver.

11. Alloy according to one or more of Claims 7 to 10, characterized in that the alloy comprises at least 0.5% by weight of copper.

12. Alloy according to Claim 11, characterized in that it comprises 0.5 - 10% by weight of copper.

13. Alloy according to Claim 12, characterized in that it comprises 0.5 - 5% by weight of copper.

14. Alloy according to one or more of Claims 7 to 13, characterized in that the alloy comprises at least 0.5% by weight of indium.

15. Alloy according to Claim 14, characterized in that it comprises 0.5 - 10% by weight of indium.

16. Alloy according to Claim 15, characterized in that it comprises 0.5 - 5% by weight of indium.

17. Alloy according to one or more of the preceding claims, characterized in that the remainder consists of tin.

18. Alloy according to one or more of Claims 1 to 16, characterized in that the remainder consists of lead.

19. Alloy according to one or more of Claims 1 to 16, characterized in that the remainder consists of a mixture of tin and lead.

20. Alloy according to one or more of preceding claims, characterized in that the alloy comprises about 4% by weight of silver, about 2% by weight of titanium, about 2% by weight of tin, about 2% by weight of indium, about 0.1% by weight of cerium and about 0.05% by weight of gallium, the remainder being lead and possibly the usual impurities.

21. Alloy according to one or more of Claims 1 to 19, characterized in that the alloy comprises about 4% by weight of silver, about 4% by weight of titanium, about 0.1% by weight of cerium and about 0.1% by weight of gallium, the remainder being tin and possibly the usual impurities.

22. Alloy according to one or more of the Claims 1 to 19, characterized in that the alloy comprises about 7% by weight of silver, about 2% by weight of copper, about 4% by weight of titanium, about 0.1% by weight of cerium and about 0.05% by weight of gallium, the remainder being tin and possibly the usual impurities.

23. Method for joining workpieces by soldering by means of a solder alloy, characterized in that the solder alloy comprises
- at least 1% by weight of an element or a mixture of elements of subgroup IVa and/or Va of the Periodic Table of the Elements,
- at least 0.01% by weight of an element or a mixture of elements of the lanthanide group,
- optionally at least 0.5% by weight of silver or copper or indium or a mixture of silver and/or copper and/or indium and
- optionally at least 0.01% by weight of gallium
- and the remainder consists of tin or lead or of a mixture of tin and lead
- and possibly of the usual impurities.

24. Method according to Claim 23, characterized in that the said joining by soldering is carried out in an oxygen-containing atmosphere.

25. Method according to Claim 24, characterized in that the said joining by soldering is carried out in air.

26. Method according to one or more of Claims 23 to 25, characterized in that the said joining by soldering is carried out at a solder temperature of at most 500°C.

27. Method according to Claim 26, characterized in that the said joining by soldering is carried out at a solder temperature of 200 - 450°C.

28. Method according to one or more of Claims 23 to 27, characterized in that the said joining by soldering is carried out without the use of a flux.

29. Method according to one or more of Claims 23 to 28, characterized in that at least one of the workpieces to be joined is made, at least on its solder joint surface, of a nonmetallic material, in particular of aluminium nitride, silicon or fibre-reinforced carbon.

30. Method according to one or more of Claims 23 to 29, characterized in that at least one of the workpieces to be joined is made, at least on its solder joint surface, of a nonmetallic material, in particular of aluminium nitride, silicon or fibre-reinforced carbon.

31. Method according to Claim 30, characterized in that the nonmetallic material is an oxidic or nonoxidic ceramic material.

32. Method according to one or more of Claims 23 to 31, characterized in that the solder alloy has been developed according to one or more of Claims 1 to 22.

## Revendications

1. Alliage, en particulier alliage à braser, caractérisé en ce
- qu'il est constitué par 1 à 10% en poids d'un élément ou d'un mélange d'éléments sélectionnés parmi le titan Ti, le zirconium Zr, le hafnium Hf, le vanadium V, le niobium Nb et/ou le tantale Ta,
- 0,01 à 1% en poids d'un élément ou d'un mélange d'éléments sélectionnés parmi le groupe des lanthanides (terres rares),
- au choix 0,5 à 10% en poids d'un élément ou d'un mélange d'éléments sélectionnés parmi l'argent Ag, le cuivre Cu et/ou l'indium In et
- au choix 0,01 à 1% en poids de gallium Ga
- et le reste en étain Sn ou en plomb Pb ou en un mélange d'étain Sn et de plomb Pb
- ainsi que par des impuretés habituelles.

2. Alliage selon la revendication 1, caractérisé en ce que l'élément ou le mélange d'éléments du groupe secondaire Va et/ou Va, mentionné tout d'abord dans la revendication 1, du système périodique est le titane ou en contient.

3. Alliage selon la revendication 2, caractérisé en ce que celui-ci contient 1 à 5% en poids d'un élément ou d'un mélange d'éléments du groupe secondaire IVa et/ou Va, mentionné tout d'abord dans la revendication 1, du système périodique.

4. Alliage selon l'une ou plusieurs des revendications précédentes, caractérisé en ce que l'élément ou le mélange d'éléments du groupe des lanthanides est ou contient du cérium et/ou du samarium et/ou du néodyme.

5. Alliage selon la revendication 4, caractérisé en ce que l'élément ou le mélange d'éléments du groupe des lanthanides est ou contient du cérium.

6. Alliage selon la revendication 5, caractérisé en ce que l'élément est le cérium.

7. Alliage selon l'une des revendications 1 à 6, caractérisé en ce que cellui-ci contient 0,5 à 5% en poids d'argent ou de cuivre ou d'indium ou d'un mélange d'argent et/ou de cuivre et/ou d'indium.

8. Alliage selon l'une ou plusieurs des revendications 1 à 7, caractérisé en ce que l'alliage contient au moins 0,5% en poids d'argent.

9. Alliage selon la revendication 8, caractérisé en ce que celui-ci contient 0,5 à 10% en poids d'argent.

10. Alliage selon la revendication 9, caractérisé en ce que celui-ci contient 0,5 à 5% en poids d'argent.

11. Alliage selon l'une ou plusieurs des revendications 7 à 10, caractérisé en ce que l'alliage contient au moins 0,5% en poids de cuivre.

12. Alliage selon la revendication 11, caractérisé en ce que celui-ci contient 0,5 à 10% en poids de cuivre.

13. Alliage selon la revendication 12, caractérisé en ce que celui-ci contient 0,5 à 5% en poids de cuivre.

14. Alliage selon l'une ou plusieurs des revendications 7 à 13, caractérisé en ce que l'alliage contient au moins 0,5% en poids d'indium.

15. Alliage selon la revendication 14, caractérisé en ce que celui-ci contient 0,5 à 10% en poids d'indium.

16. Alliage selon la revendication 15, caractérisé en ce que celui-ci contient 0,5 à 5% en poids d'indium.

17. Alliage selon l'une ou plusieurs des revendications précédentes, caractérisé en ce que le reste est composé d'étain.

18. Alliage selon l'une ou plusieurs des revendications 1 à 16, caractérisé en ce que le reste est composé de plomb.

19. Alliage selon l'une ou plusieurs des revendications 1 à 16, caractérisé en ce que le reste est composé d'un mélange d'étain et de plomb.

20. Alliage selon l'une ou plusieurs des revendications précédentes, caractérisé en ce que l'alliage est composé d'environ 4% en poids d'argent, d'environ 2% en poids de titane, d'environ 2% en poids d'étain, d'environ 2% en poids d'indium, d'environ 0,1% en poids de cérium, d'environ 0,05% en poids de gallium et le reste de plomb ainsi qu'éventuellement des impuretés habituelles.

21. Alliage selon l'une ou plusieurs des revendications 1 à 19, caractérisé en ce que l'alliage est composé d'environ 4% en poids d'argent, d'environ 4% en poids de titane, d'environ 0,1% en poids de cérium, d'environ 0,1% en poids de gallium et le reste d'étain ainsi qu'éventuellement des impuretés habituelles.

22. Alliage selon l'une ou plusieurs des revendications 1 à 19, caractérisé en ce que l'alliage est composé d'environ 7% en poids d'argent, d'environ 2% en poids de cuivre, d'environ 4% en poids de titane, d'environ 0,1% en poids de cérium, d'environ 0,05% en poids de gallium et le reste d'étain ainsi qu'éventuellement des impuretés habituelles.

23. Alliage pour relier des pièces à travailler par brasage au moins d'un alliage à braser, caractérisé en ce que l'alliage à braser est constitué
- par au moins 1% en poids d'un élément ou d'un mélange d'éléments sélectionnés parmi les éléments du groupe secondaire IVa et/ou Va du système périodique,
- au moins 0,01 en poids d'un élément ou d'un mélange d'éléments sélectionnés parmi le groupe des lanthanides (terres rares),
- au choix au moins 0,5% en poids d'argent ou de cuivre ou d'indium ou d'un mélange d'argent et/ou de cuivre et/ou d'indium et
- au choix au moins 0,01% en poids de gallium
- et le reste en étain ou en plomb ou en un mélange d'étain et de plomb
- ainsi qu'éventuellement des impuretés habituelles.

24. Procédé selon la revendication 23, caractérisé en ce que la jonction par brasage est réalisée dans une atmosphère contenant de l'oxygène.

25. Procédé selon la revendication 24, caractérisé en ce que la jonction par brasage est réalisée à l'air.

26. Procédé selon l'une ou plusieurs des revendications 23 à 25, caractérisé en ce que la jonction par brasage est réalisée à une température de brasage de 500°C maximum.

27. Procédé selon la revendication 26, caractérisé en ce que la jonction par brasage est réalisée par une température de brasage de 200 à 450°C.

28. Procédé selon l'une ou plusieurs des revendications 23 à 27, caractérisé en ce que la jonction par brasage est réalisée sans utilisation de fondant.

29. Procédé selon l'une ou plusieurs des revendications 23 à 28, caractérisé en ce qu'au moins l'une des pièces à travailler à relier est constituée au moins sur sa surface de jonction par brasage par un matériau métallique, en particulier l'aluminium, le cuivre, l'acier ou des alliages coulés de fer et de carbone tels que la fonte ou l'acier moulé.

30. Procédé selon l'une ou plusieurs des revendications 23 à 29, caractérisé en ce qu'au moins l'une des pièces à travailler à relier est constituée au moins sur sa surface de jonction par brasage par un matériau non-métallique, en particulier par du nitrure d'aluminium, du silicium ou du carbone renforcé par des fibres.

31. Procédé selon la revendication 30, caractérisé en ce que le matériau non-métallique est un matériau céramique oxydé ou non oxydé.

32. Procédé selon l'une ou plusieurs des revendications 23 à 31, caractérisé en ce que l'alliage à braser est configuré selon l'une ou plusieurs des revendications 1 à 22.
